(19) Europäisches Patentamt
European Patent Office
Office européen des brevets

(11) **EP 2 730 003 B1**

(12) **EUROPEAN PATENT SPECIFICATION**

(45) Date of publication and mention
of the grant of the patent:
**28.09.2016 Bulletin 2016/39**

(51) Int Cl.:
*H02J 3/00* *(2006.01)*     *H02J 3/06* *(2006.01)*
*H02J 13/00* *(2006.01)*

(21) Application number: **12745587.1**

(22) Date of filing: **06.07.2012**

(86) International application number:
**PCT/US2012/045656**

(87) International publication number:
**WO 2013/009588 (17.01.2013 Gazette 2013/03)**

(54) **DISTRIBUTED ENERGY GRID MANAGEMENT**

VERTEILTE STROMNETZVERWALTUNG

GESTION DE RÉSEAU ÉNERGÉTIQUE DISTRIBUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2011 US 201113178739**

(43) Date of publication of application:
**14.05.2014 Bulletin 2014/20**

(73) Proprietor: **Siemens Schweiz AG
8047 Zürich (CH)**

(72) Inventors:
• **AHMED, Osman
Hawthorn Woods, Illinois 60047 (US)**
• **JUNG, Manfred
75045 Joehlingen (DE)**

(74) Representative: **Maier, Daniel Oliver et al
Siemens AG
Postfach 22 16 34
80506 München (DE)**

(56) References cited:
**GB-A- 2 461 292   US-A1- 2011 022 242**

EP 2 730 003 B1

**Description**

FIELD OF THE INVENTION

The present invention relates to the field of energy management systems, and more particularly, to a management system directed to generating and distributing energy allocation goals to a plurality of nodes within the grid.

BACKGROUND OF THE INVENTION

The issue of climate change has spawned, among other things, goals of creating carbon neutral homes, facilities, and even municipalities. Achieving carbon neutrality, or something near carbon neutrality, requires ways of characterizing carbon usage, and ways of controlling carbon usage in an intelligent manner.

An important element in measuring and controlling carbon usage involves determining the "carbon-content" per unit of energy used by consumers. A consumer's energy consumption, combined with the carbon-content of the energy consumed, defines a "carbon-footprint" for the consumer. The carbon footprint may be loosely defined as a measure of the total greenhouse gas emissions caused directly and indirectly by a person, organization, event or product. The carbon content per unit energy affects the quantity of energy that may be consumed for a given carbon footprint. For example, if the carbon-content per unit of energy is low, such as in wind-turbine generated electricity, then higher consumption can still produce a relatively modest carbon footprint. If the carbon-content per unit energy is high, such as in energy generated by coal-fired electrical plants, then lower consumption can still produce a relatively large carbon footprint.

Accordingly, consumers and other organizations attempting to reduce their carbon footprints are concerned about whether the consumed energy is from a renewable source (e.g., solar power) which are usually associated with low carbon-content energy, or from a non-renewable source (e.g., hydrocarbon fossil fuels). There are limited incentives to use low carbon-content renewable sources of energy. As a result, the ratio of renewable to non-renewable sources of energy remains low.

At present, there is little communication to consumers as to the carbon content of the energy available to them. The availability of renewable source energy to a consumer can vary greatly, depending on such factors as weather conditions for wind, solar and wave energy systems, and excess production from other parts of the grid. Accordingly, at present a consumer cannot regulate its energy consumption in real time to adjust to the amount of renewable source energy that is available on a given day. Furthermore, there exists no system that can help coordinate carbon usage on a municipality wide basis.

Therefore, there is a need for a novel energy grid design that assists in providing information to consumers to assist in achieving carbon usage goals on an individual and municipality-wide basis.

SUMMARY OF THE INVENTION

The above goals may be overcome by a system and method implemented in accordance with the principles of the present invention. In at least some embodiments of the invention, a regional carbon usage goal is allocated to, and communicated to, individual consumers within the region.

This is achieved by the features of the independent claims.

The above-described features and advantages, as well as others will become more readily apparent to those of ordinary skill in the art by reference to the following detailed description and accompanying drawings.

BRIEF DESCRIPTION OF THE DRAWINGS

Fig. 1 shows a block diagram of an energy management system that incorporates at least some embodiments of the invention:

Fig. 2 shows a representative diagram of an exemplary city in which the embodiment of Fig. 1 may be implemented;

Fig. 3 shows a block diagram of a computer system that may be used as various components of the energy management system of Fig. 1;

Fig. 4 shows a flow diagram of an exemplary set of operations of the integrated management system of Fig. 1;

Fig. 5 shows a flow diagram of an exemplary set of operations of the district management system of Fig. 1;

Fig. 6 shows a schematic block diagram of a consumer system interface to the system of Fig. 1; and

Fig. 7 shows a flow diagram of an exemplary set of operations of a consumer system interface of Fig. 6.

The present invention may take form in various components and arrangement of components and in various methods. The drawings are only for purposes of illustrating exemplary embodiments and alternatives and are not to be construed as limiting the invention.

DETAILED DESCRIPTION OF PREFERRED EMBODIMENTS

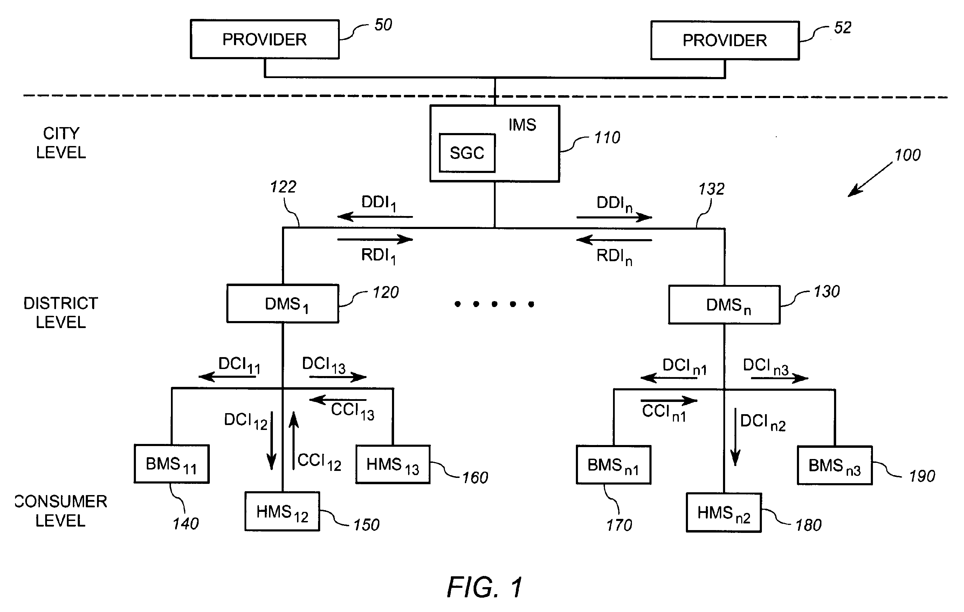

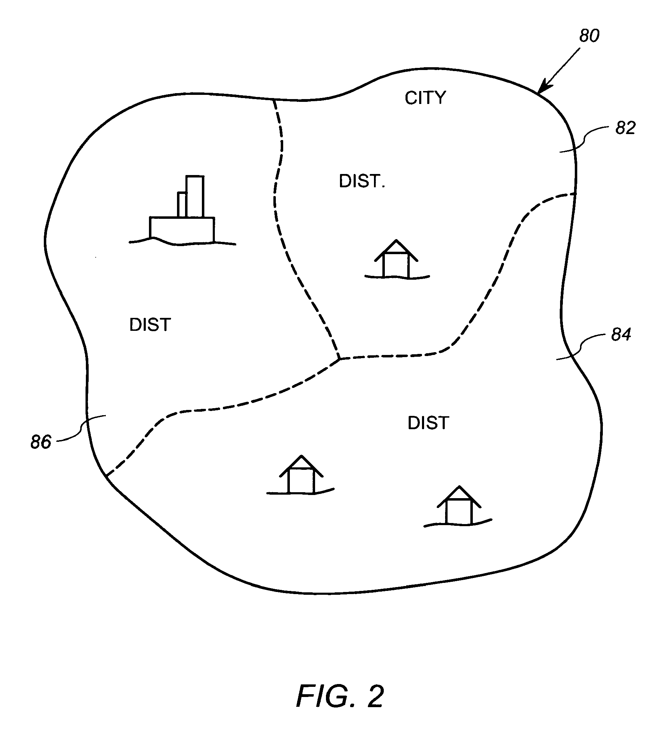

Referring to FIG. 1, a schematic for an energy management system 100 is provided. The energy management system 100 has a hierarchical design with nodes positioned at multiple levels. The levels and nodes correspond to a division of the consumers within the city. In this exemplary system of Fig. 1, the energy management system 100 corresponds to a city that is divided into districts, with each district having a plurality of energy users or consumers. Fig. 2, for example, shows a representative block diagram of a simplified example of a city 80 that is divided into districts 82, 84 and 86. Each of the districts has several consumers of energy.

Referring to Fig. 1, the exemplary embodiment of the system 100 thus includes three levels: a city level, a district level, and a consumer level. It will be appreciated, however, that other number of levels are also possible. For example, the grid may be designed with four or five levels of hierarchy, such that the additional levels are for townships and neighborhoods (or city blocks).

In the exemplary embodiment described herein, the system 100 includes a single city level node in the form of integrated management system (IMS) 110. The system 100 further includes $n$ district level nodes referred to as district management systems $DMS_1$ ... $DMS_n$. Only the nodes $DMS_1$ 120 and $DMS_n$ 130 are shown in Fig. 1. The IMS 110 is operably connected to communicate with the $DMS_1$ 120 and $DMS_n$ 130 through suitable data links 122, 132. The IMS 110 is further configured to communicate with one or more energy suppliers or distributors 50, 52, etc. through suitable data links. Each energy supplier or distributor 50, 52 is configured to deliver electrical energy to the various consumers associated with the system 100. Moreover, each energy supplier or distributor 50, 52 is configured to supply energy from different types of generators, such as coal, solar, hydroelectric, nuclear, and the like. The energy suppliers 50, 52 are configured to communicate energy availability information, including information regarding availability from various sources, or in the alternative, information regarding the carbon content of energy delivered.

The system 100 also includes a number of consumer or end user nodes, each coupled to corresponding $DMS_x$. In the simplified example of Fig. 1, the end user nodes include building management systems $BMS_{11}$, $BMS_{n1}$, and $BMS_{n3}$, and home management systems $HMS_{12}$, $HUMS_{13}$ and $HMS_{n2}$. The $DMS_1$ 120 is operably coupled to communicate with a building management system $BMS_{11}$ 140, a home system $HM_{12}$ 150, and another building management system $HMS_{13}$ 160, via respective communication links 142, 152 and 162. Similarly, the $DMS_n$ 130 is operably coupled to communicate with a building management system $BMS_{n1}$ 170, building management system $HMS_{n2}$ 180, and building management system $BMS_{n3}$ 190, via respective communication links 172, 182 and 192.

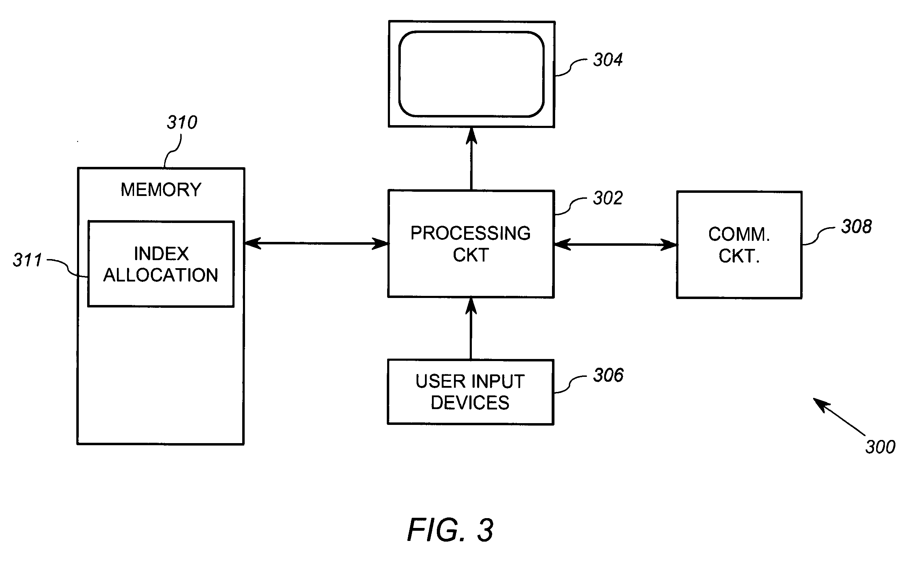

In the embodiment of Fig. 1, the IMS 110 includes the functionality of a smart grid controller (SGC) 102. Fig. 3 shows an example of a computing system 300 that may be used to carry out the operations of the IMS 110 and SGC 102. A similar structure may be used to carry out the operations of the $DMS_1$ 120 and $DMS_n$ 130. With reference to Fig. 3, the computing system 300 includes a processing circuit 302, a display 304, one or more user input devices 306, a communication circuit 308, and multiple types of memory 310.

The processing circuit 302 includes one or more microprocessors or coprocessors, and all supporting circuitry known in the art to support such microprocessors in a general purpose or special purpose computing device. The display 304 may suitably be a commercially available display, such as for example, an LCD or other type of flat screen display. The user input devices 306 include keyboards, touch screen, key pads, pointing devices, and/or any other well-known computer input device. The communication circuit 308 may be a suitable communication circuit for connecting in a wired or wireless fashion to local area network, not shown, which in turn may operably connect to the Internet, a power line carrier network, wireless network or the like. The memory 310 may include volatile and non-volatile memory devices normally associated with general purpose computing devices. It will be appreciated that the memory 310 as shown herein may include a mass data store that is not physically located within the same box or housing as the processing circuit 302. It will further be appreciated that the computing system 300 may operate as a server that cooperates with client computers, not shown, to carry out the user interface operations of the computing system 300 in a manner well known in the art.

The memory 310 includes programming instructions for grid index allocation 311 that are carried out by the processing circuit 302. These instructions, when executed by the processing circuit 302, perform the operations described herein attributable to the IMS 110 and/or smart grid controller 102.

With reference to both Figs. 1 and 3, the memory 310 includes the historic data associated with the grid. The grid historic data includes periodic information associated with the grid. The periodic data may be based on hourly data for each calendar day, daily data, weekly data, or monthly data. Further, the historic data includes goals for energy consumption. For example, the historic data for each day of the past several years includes desired energy consumption limits/goals as well as actual energy consumption levels. The processing circuit 302 stores such data to, and obtains such data from, the memory 310 as necessary to carry out the operations of the SGC 102 and/or IMS 1*10 as described herein.

In accordance with this embodiment of the invention, the SGC 102 is configured, via the index allocation software 311 stored in the memory 310, to generate a desired index DI for the entire city. The desired index is a desired value (e.g. a set point) for a parameter defined herein in this exemplary embodiment as a green index. The *green index* is a parameter that provides an indication, measure or approximation of carbon usage. With respect to electricity consumption, carbon usage may be approximated based on energy consumption and carbon-content per unit energy. As discussed above, the type of energy generator can greatly affect carbon usage. For example, a large amount of energy consumed that is generated by solar power has a low carbon usage value, while a relatively small amount of energy generated by a coal-fired electrical plant has a high carbon usage value. Accordingly, the green index is a measure of energy consumption, weighted by the carbon-content per unit energy of the energy consumed. The green index may also take into account any "embedded" carbon, such as the carbon that was consumed in the construction of the relevant electrical energy generating equipment. Accordingly, with respect to electrical energy consumption, the green index for a person, facility or area may be calculated as

$$GI = \sum_{n=1}^{N} (cons_n * cc_n)$$

where there are *N* different generators of electricity, the value $cons_n$ is a measure of consumption of energy provided by each generator *n,* and the value $cc_n$ is a measure of the carbon content for each unit of energy generated by the generator n. In this implementation of the green index, it is desirable to reduce the green index *GI.* However, it will be appreciative that other variants of the green index (based on energy consumption and carbon-content of energy consumed) may be employed where it may be desirable to increase the green index. It will be appreciated that while the term "green index" is used herein for clarity, the actual index is not definitively a measure of "greenness", but rather a measure of carbon consumption as it relates to electrical energy.

Reduction in the green index GI in the embodiments discussed herein may be accomplished by consuming less energy, using energy generators that provide energy having less carbon content, or both. In the examples discussed herein, the green index values are normalized, for example, as a per person value. In this manner, an individual consumer's green index may be intuitively measured against the overall green index for the city, as well as against the green index for other entities. Various methods may be used to account for businesses, which have no permanent "population". In the alternative to normalizing by population, green indices may be normalized for per unit area occupied (such as per building square foot). Other methods of normalizing the green index to allow for meaningful comparison between city, district and consumer green index goals may be implemented.

It will also be appreciated that carbon usage necessarily includes items other than electricity consumption, such as heating fuel (natural gas, oil, propane, etc.) and vehicle fuel. While the description provided herein does not directly address those factors, it will be apparent that methods described herein can be combined with methods of determining, allocating and controlling carbon usage specifically related to heating fuel and vehicle fuel, in order to determine a comprehensive green index for a person, location or community.

Referring again specifically to Fig. 1, the SGC 102 is configured to generate a *desired* green index, or simply desired index (DI), for the city. The desired index DI is a green index value that represents the goal for the city for a time period, such as a day, week or month. The desired index is calculated based on many factors, including historical meteorological data (e.g., average daily high temperature and humidity), meteorological forecasts, forecasted energy consumption needs, and an overall carbon usage goal. The SGC 102 also considers historical performance data for the grid/region and predicted availability of energy from renewable energy sources (hereinafter referred to generally as "green energy"). Finally, the desired index DI may be determined in part by commitments of specific consumers to meet energy consumption goals.

Among the historical data that may be used for the desired index DI is the *actual* index AI achieved by the area in previous time periods. The actual index is the green index calculated from the actual energy used, and the carbon-content per unit energy of the energy used. The SGC 102 may consider the AI from the immediate preceding time period, as well as those AIs from several time periods using a weighted time window that captures seasonal trends, captures trends related to days of the week (workdays vs. weekends) and other trends affecting carbon usage. Determination and calculation of the AI for previous periods is discussed below in further detail.

The SGC 102 is further configured to generate a desired index ($DDI_1 ... DDI_n$) for each of the n districts in the hierarchical system 100. The SGC 102 calculates the values $DDI_1... DDI_n$ based on the desired grid green index DI for the city and other parameters. In particular, the SGC 102 preferably generates desired green indices $DDI_1 ... DDI_n$ for the various districts such that the composite weighted average (weighted by population or area) is equal to the city green index DDI. In a simple case, if the desired grid green index DDI has a value of 25, then the each of the desired district indices $DDI_1$ ... $DDI_n$ could suitably have values of 25.

However, in accordance with the present invention, the SGC 102 need not allocate the green indices to the various districts equally. Instead, the SGC 102 allocates the desired district indices $DDI_1$ ... $DDI_n$ based on additional factors, such as historical consumption data for each district. For example, in a particularly old part of a city, it may be more difficult for the area to achieve the same green index (carbon usage per person) as a newer area that has been constructed to be more energy efficient. Likewise, in a largely industrial area, the carbon usage per resident will be several times that of a largely residential area. As a consequence, the SGC is configured to use historical energy usage data for each district to determine the desired district indices $DDI_1$... $DDI_n$. In this embodiment the historical data can include one or more prior actual green index values $ADI_1$... $ADI_n$ for each district. The SGC 102 further determines desired district indices $DDI_1$...$DDI_n$ based on customer commitments, if any, to a specific green index level.

An exemplary determination of the desired district indices $DDI_1$... $DDI_n$ is provided with reference to Fig. 2. Referring again to Fig. 2, it is assumed that the city 80 has a population of 1000, and three districts 82, 84 and 86 of populations 400, 400 and 200, respectively. It will be assumed that the district 82 is largely residential, consisting of is older and relatively less energy-efficient homes. It is further assumed that the district 84 is also residential, but has newer and more efficient dwellings, and that the district 86 is largely industrial.

With these assumptions, the total carbon usage value is determined for the city 80, and then the total carbon usage value is allocated among the various districts based on the factors discussed above. The district green indices may then be obtained from allocated total carbon usage values for the districts. For example, if the desired index DI for the city is "25", then the total carbon usage value (population * DI) for the city 80 is 25000 (in arbitrary units). The SGC 102 in such a case generates green indices $DDI_{82}$, $DDI_{84}$ and $DDI_{86}$ for the districts 82, 84 and 86 such that the total carbon usage value for all the districts combined equals the total carbon usage for the city. In other words, the SGC 102 follows the following equation:

$$DI * 1000 = DDI_{82}*400 + DDI_{84}*400 + DDI_{86}*200$$

or

$$25000 = DDI_{82}*400 + DDI_{84}*400 + DDI_{86}*200$$

If historical data indicates that the first and third districts 82, 84 require more energy usage per person, then the desired district indices $DDI_{82}$ and $DDI_{86}$ for those districts will be higher than the desired district index $DDI_{84}$ for the second district 84. Thus, in one example, the SGC 102 may determine the values of $DDI_{82} = 28.3$, $DDI_{86} = 28.3$, and $DDI_{84} = 20$. This allows the first and third districts 82, 86 to use more carbon per capita than the second district 84.

In addition to the foregoing functions, the SGC 102 and/or the IMS 110 is configured to calculate the *actual* green index AI for a prior period for the city based on information received from external sources. The AI value represents the actual green index achieved for a prior day, or other period of time. The IMS 110 may suitably calculate the AI based on consumption information provided by other elements in the system 100, such as from the district management systems $DMS_1$...$DMS_n$.

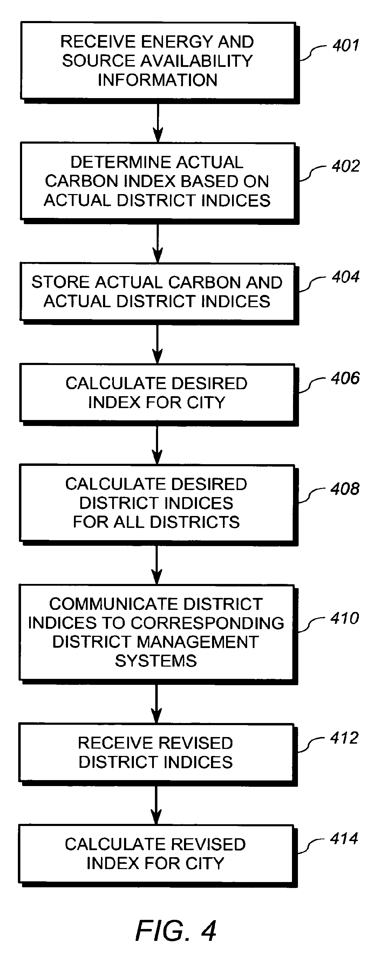

In addition to the foregoing, the SBC 102 and the IMS 110 may also be configured to provide information regarding the availability of energy from a variety of energy generators. As will be discussed below, the IMS 110 may be able to identify how much energy generated by solar, wind, hydro-electric and coal fired plants is available for use on a given day. Such information may suitably be provided by the energy providers/distributors 50, 52. Further detail regarding the operations of the IMS 110/SBC 102 are discussed below in connection with Fig. 4.

Referring again to the elements of the system 100, the $DMS_1$ may suitably be a computing device similar to that of Fig. 3, except that the memory 310 stores program instructions suitable to carry out the DMS operations described herebelow.

The $DMS_1$ is configured, via software, to receive the district's desired index $DDI_1$ from the IMS 110. The $DMS_1$ is further configured to generate, among other things, a green index ($DCI_{11}$, $DCI_{12}$ and $DCI_{13}$) for each end user or consumer, i.e. each building/home in its district. The $DMS_1$ 120 is configured to generate each desired building/home index $DCI_{1x}$ based on the desired district index $DDI_1$, and other parameters. In particular, the $DMS_1$ is configured to generate desired green indices $DCI_{11}$ ... $DCI_{13}$ for the various homes and buildings such that the overall carbon usage for the district achieves the district's $DCI_1$. To this end, the $DMS_1$ 120 may suitably generate the values $DCI_{11}$ ... $DCI_{13}$ in a manner analogous to that used by the SGC 102 to generate the desired district green indices $DDI_1$ ... $DDI_n$. As with the district desired green indices, the desired index for each end user or consumer is generated based on historical consumption information for the location, commitments by specific consumers, and other factors. By taking into account historical factors (including past consumption), realistic green indices may be generated for each location. The $DIMS_{11}$ 120 is also configured to provide the values $DCI_{11}$, $DCI_{12}$ and $DCI_{13}$ to, respectively, the $BMS_{11}$ 140, the $HM_{12}$ 150, and the $HMS_{13}$ 160.

As will be discussed below in further detail, the $DMS_1$ 120 is further configured to determine and provide a revised district index $RDI_1$ based on the original desired district index $DDI_1$ and any commitments by consumers $BMS_{11}$, $HMS_{12}$, and $HMS_{13}$ to further reduce their individual carbon consumption. For example, if the consumer served by $HMS_{12}$ can commit to a lower (or better) index than its allocated index $DCI_{12}$, then it can provide a committed index $CCI_{12}$ to the $DMS_1$ 120. The $DMS_1$ 120 in such a case would generate a revised district index $RDI_1$ that is based on the original desired index $DDI_1$ adjusted by the customer's commitment $CCI_{12}$. In this manner, the district can actually achieve a better overall index than originally allocated. The $DMS_1$ is configured to communicate the revised district index $RDI_1$ to the IMS 110.

Similar to the $DMS_1$ 120, the $DMS_n$ 130 is configured to generate a desired index ($DCI_{n1}$, $DCI_{n2}$ and $DCI_{n3}$) for each building/home in its district. The $DMS_n$ 130 is configured to generate each desired building/home index $DCI_{nx}$ based on the desired district index $DDI_n$, and other parameters. The $DMS_n$ 130 is further configured to provide the values $DCI_{n1}$, $DCI_{n2}$ and $DCI_{n3}$ to the respective systems $BMS_{n1}$ 170, $HMS_{n2}$ 180, and $BMS_{n3}$ 190. The $DMS_n$ is also configured to determine and provide a revised district index $RDI_1$ based on the original desired district index $DDI_1$ and any commitments by consumers $BMS_{n1}$, $HMS_{n2}$, and $BMS_{n3}$ to further reduce their individual carbon consumption.

The home devices (e.g. $HM_{12}$) include interfaces to the system 100, or system interfaces, that display for a consumer its desired green index as calculated by its respective $DMS_x$. The system interface may take the form of a home computer, a personal communication device (such as a smart phone), or a special unit installed into, or connected to, the user's home thermostat or other equipment, such as a utility meter or load control device, not shown, but which are known in the art. Preferably, the user's system interface has the ability to communicate the desired index to the person, as well as other information that identifies how a person may alter his or her consumption patterns to effect achievement of the desired index. Such devices may take advantage of information available over the smart grid, such as the amount of "green" energy available to the consumer. In addition, the user's system interface preferably also has the ability to communicate upstream "commitments" from the consumer to achieve a better green index than the consumer's initial DCI value. Additional detail regarding this capability is provided further below.

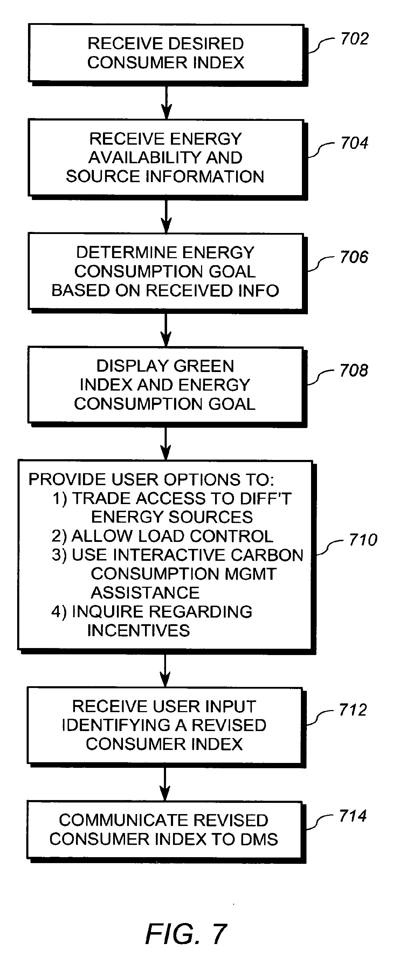

The building management systems (e.g. $BMS_{xy}$) are part of more complex building automation systems for larger buildings, for example, office buildings. The system interface of a $BMS_{xy}$ may take the form of a HVAC system workstation, security workstation, or another controller. Further detail regarding the operations and structure of the system interfaces for the systems $HM_{xy}$ and $BMS_{xy}$ are provided below in connection with Fig. 7.

In the general operation of the system of Fig. 1, the SGC 102 determines the grid's desired index (DI) at the beginning of each period, such as daily. As discussed above, the SGC 102 generates the $DDI_1$ based on historical information for the grid, prior day consumption information, as well as weather information and other external information.

Preferably the SGC 102 determines the DI value with an overall goal to achieve carbon neutrality for the district. To this end, the SGC 102 may receive a carbon neutral goal or threshold value from a suitable source that calculates such a value, such as a scientific or government facility. In other words, such a source may determine what level of carbon consumption per capita, per building, or per area, is required to achieve a carbon neutral condition for the day (or week, month or year). In determining the desired index DI, however, the SGC 102 does not merely select a value of the DI that achieves or corresponds to carbon neutrality for that specific period. In reality, daily energy needs vary substantially from day to day, as does the availability of green energy. As a consequence, maintaining a steady daily green index is not realistic. Accordingly, the SGC generates the value of the DI such that the trend for the city over long periods of time is toward carbon neutrality. Thus, on any given day, the DI may be selected to be above or below that which is required to achieve carbon neutrality for that day, taking into account the energy needs, weather, and availability of green energy.

Fig. 4 shows an exemplary set of operations that may be carried out by the SGC 102 and/or IMS 100 of Fig. 1 in the operation of the system 100. It will be appreciated that while the operations of Fig. 4 are shown in flow diagram form, the steps of Fig. 4 need not be carried out in any particular order, and indeed may constitute different processes executed on the computing device (e.g. the device 300 of Fig. 3). The steps of Fig. 4 may suitably be carried out once per day.

In step 401, the IMS 110 receives from an energy provider 50, or more specifically, a computing device of the energy provider 50 (hereinafter referred to as energy provider 50), an identification of the amount and/or pricing of energy available from each of a plurality of generators. Each of the generators has associated with it a carbon-content value. By way of example, the energy provider may provide to the IMS 110 an identification of how much energy can be made available for the next period from coal-fired plants, hydro-electric plants, wind turbine sources, and solar sources. The energy provider 50 may provide the information in any suitable manner, such as by providing pricing quotations for energy from each source, and/or maximum allocations and prices from each source.

In step 402, the IMS 110 determines the AI for the city for a prior time period, such as the previous day. To this end, the IMS 100 obtains from the $DMS_1 ... DMS_n$ the aggregate $ADI_x$ values for their respective districts on from the prior day. The IMS uses these values, $ADI_1 ... ADI_n$, to determine the city-wide AI for the prior day. If the AI is normalized on a per person basis, then the aggregate AI may be calculated by the following sum:

$$AI = \sum_{j=1}^{n} (ADI_j * population_j)$$

for each district $j$.

In step 404, the IMS 110 stores the calculated AI value and the district values $ADI_1 ... ADI_n$ in a memory (e.g. memory 310 of Fig. 3), along with a time stamp or other indicator of at least the date to which it pertains.

In step 406, the IMS 110 (via the SGC 102) calculates the desired index DI for the city for the next time period. As discussed further above, the SGC 102 determines the DI based on historical data (such as recent AI values), seasonal data (such as consumption data or AI data for similar dates over past years), weather forecasts, the predicted capacity of the various energy generators, and any other information that may be helpful in predicting energy usage on a city-wide basis. At a minimum, the SGC 102 should either generate or obtain an energy demand prediction for the next day, and a prediction or estimate of the potential city usage of energy from various energy generators for the next day. The prediction or estimate of energy available from various types of energy generators is derived from the pricing/availability information on the various types of generators provided by the energy provider 50, 52 in step 401. When the available capacity of the various generators (coal-fired plants, hydro-electric, wind, solar) and the predicted demand is known, an intelligent green index goal may be calculated. The SGC 102 can determine the city-wide usage of energy from the various sources based on pricing factors. For example, even though sufficient solar energy may be available for the city, it may be too expensive to purchase exclusively solar energy from the provider 50, 52. Accordingly, the SGC 102 may suitably determine a favorable mix of energy from the various sources based on availability and pricing, the data of which is received from the energy provider 50, 52.

It will further be appreciated that SGC 102 will determine the DI such that it would not require an unrealistic reduction in consumption. As discussed above, while the goal may be to achieve an average green index approaching carbon neutrality, the day to day goals will vary based on consumption patterns and availability of green energy.

Thereafter, in step 408, the SGC 102 calculates the district desired indices DDIs, or $DDI_1...DDI_n$ based on the overall DDI. As discussed above, the SGC 102 effectively allocates the green index goals among the districts to taken into account the specific needs, structure and capabilities of each district. To this end, the SGC 102 finds a solution wherein the following equation is satisfied:

$$DI * POP = DDI_1 * DIST\_POP_1 + ... + DDI_n * DIST\_POP_n$$

where *POP* represents the total population (or other normalizing factor), and $DIST\_POP_x$ is the population (or other normalizing factor) for the district *x*.

Once the values of $DI_1... DDI_n$ are determined, the IMS 110 in step 410 provides the values to the respective district management systems $DMS_1$ 120...$DMS_n$ 130. The IMS 110 may also provide information regarding the available energy from the various energy generators to the respective district management systems $DMS_1$ 120...$DMS_n$ 130. It is possible that the IMS 110 could play some role in allocating energy from the various generators (coal-fired, hydro, solar, wind, etc.) to the various districts. However, it is also possible that other systems perform this allocation independently. Accordingly, it is also possible that the IMS 110 provides no information regarding the available energy from the various generators, or provides information regarding the allocation of energy from the various generators that had been determined by another system.

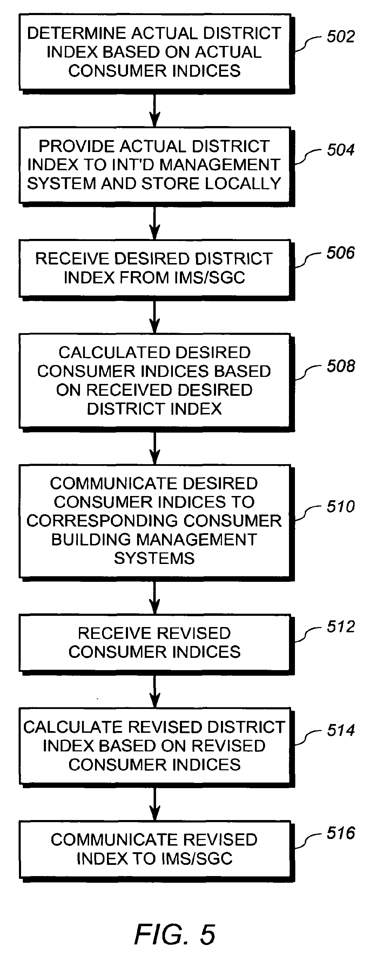

Thereafter, in step 412, the IMS 110 receives from the respective district management systems $DMS_1$ 120...$DMS_n$ 130 a revised district desired index, $RDI_1...RDI_n$. The revised index, $RDI_x$ is calculated by the various district management systems $DMS_1$ 120...$DMS_n$ 130 based on the original desired district index $DDI_1...DDI_n$ and any commitments to achieve a lower consumption value or green index by consumers. This operation will be discussed below in further detail in connection with Fig. 5.

In step 414, the IMS 110 calculates a revised index RI based on a sum of all revised district indices $RDI_1...RDI_n$. For any district that does not have a revised district index, the original value $DDI_x$ may be used.

As a consequence of the operations of Fig. 4, the IMS 110/SGC 102 performs multiple roles, including that of aggregating and storing consumption information from prior periods, determining a desired city-wide carbon consumption index DI, and determining desired district carbon consumption indices such that, if achieved, the entire city will achieve the desired index DI. In this embodiment, the IMS 110/SGC 102 further determines a revised carbon consumption index RI based on the cumulative commitments of individual end users to reduce their consumption and/or achieve reduced carbon consumption for a given day (or other time period).

As discussed above, the revised desired index RI may be used in a number of ways. In one embodiment, the IMS 110 may communicate the consequent reduced demand level to the provider 50, 52 in an effort to achieve better pricing, or to challenge the provider 50, 52 to make available even more low-carbon energy at a given price point. In this manner, the consumers and end users have the ability to coordinate to demand more energy generated by lower carbon sources.

For example, one or after step 414, the SGC 102/IMS 110 may communicate information to the provider 50 requesting revised energy availability information based on the revised index RI. In particular, if the revised index RI is substantially improved over the originally calculated desired index DI, the IMS 110 may request more favorable pricing based on reduced carbon usage (or even reduced overall usage) resulting from the commitments that resulted in the revised index. The IMS 110 would then receive from the provider 50 revised availability information as per step 401, preferably with better pricing terms. In some cases, the provider 50 may provide information indicating even better terms if the city can reduce its needs still further. The IMS 110 would then calculate a new desired index based on the further proposal from the provider. Thereafter, the IMS 110 can execute again the operations of Fig. 4 using the new desired index. In this manner, the IMS 110 (and the city in general) can challenge the energy provider 50, and vice versa, in an iterative manner to reduce carbon usage and/or overall energy consumption.

Fig. 5 shows the operations carried out by each $DMS_x$ to carry out the functionality of the system 100. As with Fig. 4, the operations of Fig. 5 need not be carried out in the precise order given, and may constitute different processes executed on the computing device (e.g. the device 300 of Fig. 3). The steps of Fig. 5 may suitably be carried out once per day.

In step 502, the $DMS_x$ (e.g. $DMS_1$ 110) determines the $ADI_x$ for the district for the prior time period, such as the previous day. To this end, the $DMS_x$ obtains from the various consumer systems $BMS_{xy}$ and $HM_{xy}$ their respective actual green index $ACI_{xy}$ values from the prior day. The $DMS_x$ uses these values $ACI_{xy}$ to determine the district-wide $ADI_x$ for the prior day. If the $ADI_x$ is normalized on a per person basis, then the aggregate $ADI_x$ may be calculated by the following sum:

$$ADI_x = \sum_{j=1}^{n} (ACI_{xj} * population_{xj})$$

wherein $ACI_{xj}$ is the actual green index for the $j$th building or home system in the district x, and the value *population*$_{xj}$ is the population normalization value for (i.e. number of people associated with) the jth building or home system in the district x.

In step 504, the IMS 110 stores the calculated district $ADI_x$ value and further communicates the district value $ADI_x$ to the IMS 110.

In step 506, the district management system $DMS_x$ receives the desired green index $DDI_x$ for the district from the IMS 110.

Thereafter, in step 508, the $DMS_x$ calculates the desired indices $DCI_{xj}$ for each consumer system in the district, based on the overall desired index $DDI_x$ for the district. For example, the $DMS_1$ would calculate the desired green index $DCI_{11}$ for the $BMS_{11}$ 140, the desired green index $DCI_{12}$ for the $HMS_{12}$ 150, and the desired green index $DI_{13}$ for the $HMS_{13}$ 160, based on the value $DDI_1$. As discussed above, the $DMS_x$ effectively allocates the green index goals among the consumer systems in a manner that takes into account the specific needs, structure and capabilities of each consumer. To this end, the $DMS_x$ finds a solution wherein the following equation is satisfied:

$$DDI_x * DIST\_POP_x = DCI_{x1} * CUST\_POP_{x1} + \ldots + DCI_{xn} * CUST\_POP_{xn}$$

where *DIST_POP*$_x$ represents the total population (or other normalizing factor) of the district *x,* and *CUST_POP*$_{xj}$ is the population (or other normalizing factor) for the $j$th customer in the district x.

Once the values of $DCI_{xj}$ are determined, the $DMS_x$ in step 510 provides the values to the respective consumer systems in the district. Thus, for example, the $DMS_1$ would provide the values $DCI_{11}$ $DCI_{12}$ and $DCI_{13}$ to the respective systems $BMS_{11}$ 140, $HM_{12}$ 150 and $HMS_{13}$ 160. The $DMS_x$ may also provide information regarding the available energy from the various energy generators to the respective consumer system.

In this manner, the desired indices for the various end user building systems $CMS_{111}$ 140, $HM_{112}$ 150, $CMS_{113}$ 160, $CMS_{1n1}$ 170, $CMS_{1n2}$ 180 and $CMS_{1n3}$ 190 are selected intelligently to achieve the desired carbon consumption index DI for the entire city.

It can be seen that in addition to the downward propagation and allocation of desired green indices for the systems, districts and city, the system 100 also operates to effectuate upward propagation of *actual* green indices for the previous time period to the SGC 102 and other intermediate nodes.

One advantage of the embodiment of Fig. 1 is that it allows for the communication of carbon usage goals to individual end users, wherein the goals are selected to help achieve a community-wide carbon usage goal. In this manner, individual energy consumers can be made aware of how they can contribute meaningfully to reducing or at least limiting carbon and/or energy usage. As will be discussed below, the system 100 of Fig. 1 makes possible a number of further enhancements that can assist in achieving carbon neutrality for a city or region. These enhancements can include automatic load shedding to achieve a desired green index, trading of excess carbon usage allotments, and the like.

Thereafter, in step 512, the $DMS_x$ receives from the respective end user building management systems (e.g. $BMS_{11}$ 140, $HM_{12}$ 150 and $HMS_{13}$ 160) any end user commitments to achieve a carbon consumption index that differs from the desired index $DCI_{x,y}$ provided to them in step 510. As will be discussed below, the end user or consumer has the option to commit to a green index or carbon consumption index for a period (i.e. the next day) based on a number of factors, such as the user's ability to reduce consumption or gain access to additional green (low-carbon) energy. This commitment value, $CIC_{xy}$ is preferably lower than the $DCI_{xy}$ provided to the user in step 510.

In step 514, the $DMS_x$ calculates a revised district index $RDI_1...RDI_n$. The revised index, $RDI_x$ is calculated by taking the original desired district index $DDI_x$ and changing it based on the $CIC_{xy}$ values.

By way of example, consider a user in the $HM_{12}$ has committed to carbon usage for the period that is 50% of the carbon usage originally allocated to the $HM_{12}$ in step 510. In other words $CDC_{12} = 0.5 * (DCI_{12})$. The $DMS_1$ calculates a revised district index $RDI_1$ based on the original desired district index $DDI_1$ reduced by the amount of the user's 50% reduction in its allocation. In this manner, the district's index $DDI_1$ for the period can be reduced be accumulated commitments of users within the district to reduce their carbon/energy consumption.

In step 516, the $DMS_x$ provides the revised district index $RDI_x$ to the IMS 110. As discussed above, the IMS 110 can calculate a new city-wide or region-wide index RI based on the revised district indices $RDI_1...RDI_n$.

In order to carry out the green index communication and propagation features of the system 100 to the consumer, the end user device (e.g. $HM_{12}$ 150, $BMS_{n1}$ 170, etc.) includes a user interface that allows for communication of information to (and from) the end user. In the case of a business or larger facility (e.g. $BMS_{11}$ 140), the building automation system (e.g. HVAC, fire safety, or security system) will likely have a computer workstation that may be used as the user interface to the system 100. In the case of a residential end user, a home computer may be used as the user interface to the system 100. However, it will be appreciated that HVAC controllers (i.e. thermostats) in residential environments often contain sufficient user interface tools (e.g. touch screens) that can allow for interactivity with the system 100.

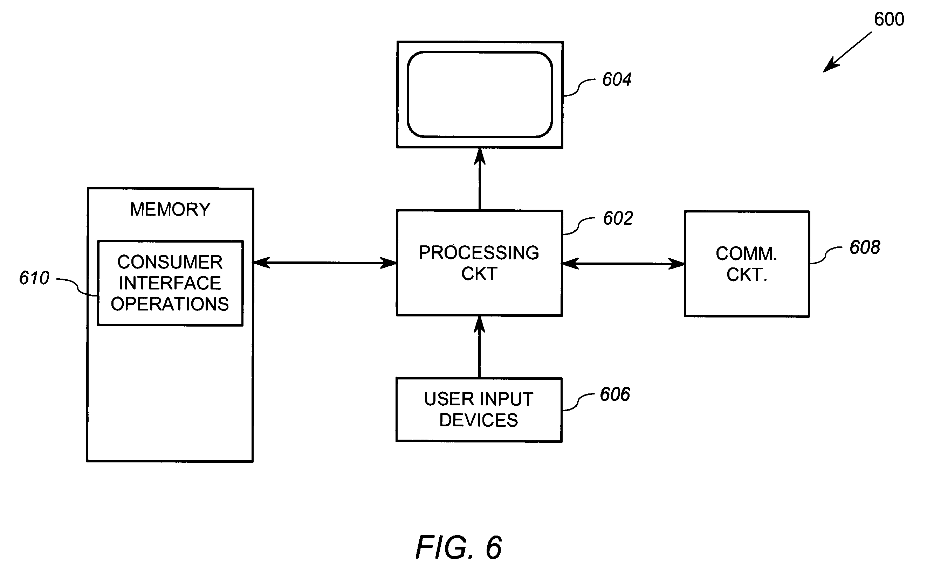

Fig. 6 shows an exemplary system interface 600 that includes the basic components required to carry out the enhanced features of the system of Fig. 1. The system interface 600 may suitably be employed as any of the $BMS_{xy}$ systems or $HM_{xy}$ systems of Fig. 1. The system interface 600 includes a processing circuit 602, a display 604, user input devices 606, communication circuits 608, and memory 610. The processing circuit 602 is operably coupled to receive input from the user input devices 606, to provide output display information to the display 604, and to communicate data to and from the memory 610 and the communication circuits 608. As discussed above, the elements of the system interface 600 may be configured as a home computer, a building system work station, or even a wall thermostat device with a touchscreen display. The communication circuits 608 include any circuit that is capable of communicating with at least a district management system $DMS_x$ via a communication link, such as any of the links 142, 152, 162 of Fig. 1.

The memory 610 includes programming instructions sufficient to carry out, among other things, the consumer interface operations of Fig. 7 discussed below. If the system interface 600 is implemented as a home computer or other computer workstation, the consumer interface programming instructions may be downloaded from a server over the Internet, or some other network. The server may in some cases be implemented within the IMS 110 of Fig. 1.

Referring now to Fig. 7, the depicted flow diagram comprises an exemplary set of operations that may be carried out by the processing circuit 602 of the system interface 600 to provide an end user with information communicated by the system 100 of Fig. 1, and to provide the user with various options for controlling energy usage and/or information that may be used to tailor energy usage.

In step 702, the processing circuit 602 receives the desired index (e.g. $DCI_{xy}$ of Fig. 1) for the user. As discussed above in connection with claim 1, the processing circuit 602 receives the $DCI_{xy}$ for the user via a communication link from its corresponding district building management system (e.g. $DMS_x$). Referring to Fig. 6, the information is conveyed from the communication link to the processing circuit 602 by the communication circuit 610.

In step 704, the processing circuit 602 receives information regarding the electrical energy available to the user from different energy generators. In particular, on a given day, there may be a large amount of energy from renewable energy generators (wind/solar/wave) and on other days, there may be little energy available from such sources. As discussed further above, the availability of such sources may differ day to day based on weather, equipment status, demand, and/or green energy demand. Thus, in step 704, a particular user may obtain information stating that x kilowatt-hours of electrical energy from renewable sources (wind/solar/hydro/wave) is available, and a larger amount of electrical energy from non-renewable sources (coal-fired) is available. In the embodiment described herein, the processing circuit 602 receives this information from its district management system $DMS_x$. In other cases, a separate energy brokering entity, not shown in Fig. 1, can communicate allocations of electrical energy from various energy sources, including renewable and non-renewable source electrical energy generators, to individual end users. In general, the processing circuit 602 receives information regarding how much energy from each source the user may consume.

In step 706, the processing circuit 602 calculates an energy consumption goal (i.e. maximum) for the user based on the received desired index (step 702) and the information regarding the sources of available electrical energy (step 704). If a relatively large amount of green energy is available, then the energy consumption goal may be relatively lax. If, however, a relatively small amount of green energy is available, then the energy consumption goal may be stringent (i.e. a low consumption limit).

As discussed further above, it will be appreciated that green index management will likely implicate more than electrical energy consumption through the utilities. Natural gas, oil and coal heating systems also contribute to the carbon footprint. To the extent such information is available, it can be incorporated in to the electrical energy consumption goal. For example, the processing circuit 602 may use the prior day's gas or oil usage (and weather) to predict the usage of natural gas for the current day. For predicted vehicle fuel, the processing circuit 602 may simply inquire the user for a predicted gasoline or diesel fuel usage for the day. In any event, the processing circuit 602 could be configured to incorporate the predicted usage of non-electrical energy into the carbon usage for the day. In such a system, the processing circuit 602 would determine the electrical energy goal based also on the predicted usage of other (non-electrical energy) carbon-based energy.

In step 708, the processing circuit 602 displays the user's desired index and the user's electrical energy consumption goal for the day. As discussed above, the electrical energy consumption goal is preferably calculated as the energy consumption limit that would be required to achieve the desired green index.

In step 710, the processing circuit 602 provides the user with a number of options for further action regarding the received desired green index. These options may include trading access to green energy, allowing automated load control, requesting advice on reducing consumption, requesting incentives for achieving different enhanced levels of the DCI.

It will be appreciated that the particular options shown in step 710 are given by way of example only, and other systems may selectively implement any combinations of these options, as well as others.

Referring specifically to the options presented in step 710, the first option 1) is to allow the user to engage in trading of access to green energy. In particular, while the availability of energy from various sources, including green and non-green sources, is provided to the user in step 704, it is possible through the system 100 to allow for trading of access to green energy. For example, if one user believes that it cannot achieve its nominal consumption goal as displayed in step 708, and therefore cannot achieve its desired green index, then the user may consider paying a premium to obtain access to more green energy for the day. If additional green energy is obtained, then the user may be able to meet the DCI for the day when otherwise reducing consumption to a required amount is impracticable. Meanwhile, another user may not need to use its allotted energy consumption to achieve its green index, and therefore may not need to use as much green energy as it was nominally allotted. Accordingly, the system 100 allows for trading of green energy access. Such trading would allow people to request additional green energy access at a premium, and allow others to relinquish their green energy access for a credit. This trading of green energy access allows for financial incentives to reduce consumption even when a particular user can otherwise meet its desired green index.

Such a green energy trading system can be maintained, for example, by the IMS 110 for the entire district, or by another entity such as an energy brokering system, not shown in Fig. 1, but which are known in the art.

In the second option 2) of step 710, the processing circuit 602 permits the user to select whether to employ automated load control. Automated load control may be used for the purpose of achieving the desired green index and energy consumption goal for the day. In particular, it is known to provide load control systems for residences, as well as large building automation systems. Load control includes load shedding to reduce consumption. Load control is typically carried out such that load shedding does not create dangerous situations or damage to property. For example, load shedding may be used to temporarily disable air conditioning units, water heating units or electric appliances in a residence. Load control may be used in larger scale HVAC systems to alter temperature set points.

If the user selects this option in step 710, then the user allows for software executed either by the processing circuit 602, by the $DMS_x$ or even the IMS, to perform load control and/or load shedding at the user's residence (or facility) as is necessary to achieve the user's DCI value. It will be appreciated that many users do not want to relinquish control over their use of electrical energy. Such users need not select this option. Nevertheless, others that desire to achieve their desired green index without having to determine how and where to adjust their consumption may elect this option.

In the third option 3) of step 710, the user may simply request advice on reducing consumption. For example, the user may request advice on how increasing their temperature set point from 74° to 76° for two hours may decrease their electricity consumption, and hence affect their green index for the day. To this end, the processing circuit 602 may execute energy management software that is able to predict and/or calculate electrical energy consumption based on changes in behavior. In some cases, the energy management software resides at the $DMS_x$, IMS 110, or some other remote server device. In any event, once the predicted energy consumption reduction is determined, the effect on green index may be determined based on the predicted reduction and the electrical energy sources available to the user as determined in step 704. Using this function, the user can actively participate to reduce his or her green index by exploring potential methods of reducing consumption and their effect on carbon usage.

An additional option 4) of step 710 facilitates incentives for a user to exceed expectations or goals defined by its desired green index. In particular, the processing circuit 602 in this option would allow the user to inquire as to whether a monetary or other incentive is available to achieve 90% or less of the user's desired green index for the day. The incentives may be managed at the $DMS_x$ and/or the IMS of Fig. 1. To this end, the $DMS_x$ or IMS may communicate available incentives to the processing circuit 602 in response to the execution of this option. The available incentives might include those that provide a credit for keeping the DCI below a prescribed lower limit for the day. The use of incentives can achieve further reduction of carbon usage even among those who can readily meet their DCI for the day.

Finally, in step 712, the user may enter a commitment to a different green index for the next period based the original desired index $DCI_{x,y}$, the user's ability to obtain access to additional low-carbon energy (i.e. by trading access to more in step 710), and the user's ability to reduce consumption below the consumption goal displayed to the user in step 708.

In this manner, the user can assist in further reducing the carbon consumption. In step 714, the consumer index commitment $CIC_{xy}$, is transmitted upward to the respective district management system $DMS_x$. As discussed above in connection with steps 512 and 514, the $DMS_x$ gathers all consumer commitments $CIC_{x,y}$ and determines a revised district index $RDI_x$ based on those commitments.

One of the features of the options of the above-described system is that each consumer in the community can contribute to helping the entire community achieve its own green index. While the communication of the desired green index to the individual consumer provides a benchmark for each user, the additional options of step 710 help each user tailor its consumption and/or purchasing of energy to meet its individual goal.

While the present invention has been illustrated by the description of exemplary processes and system components, and while the various processes and components have been described in considerable detail, is limited only by the scope scope of the appended claims. Additional advantages and modifications will also readily appear to those skilled in the art. The invention in its broadest aspects is therefore not limited to the specific details, implementations, or illustrative examples shown and described, accordingly, departures may be made from such details without departing from the scope as defined in the appended claims.

**Claims**

1. An arrangement for use in a distributed system (100) for an energy grid, comprising:

    a processing circuit (302); and
    a plurality of destination nodes (140, 150, 160) coupled to the processing circuit;
    wherein.
    the processing circuit (302) is configured to

        calculate a desired destination index (DCI) for each of the plurality of destination nodes (140, 150, 160) based on a desired aggregate index (DDI) for the plurality of destination nodes (140, 150, 160), wherein the desired aggregate index (DDI) includes information representative of carbon consumption, and communicate each desired destination index (DCI) to the corresponding one of the plurality of destination nodes (140, 150, 160); and

    each of the plurality of destination nodes (140, 150, 160) is configured to:

        receive the desired destination index (DCI) from the processing circuit (302),
        display the desired destination index (DCI) on a display (604);

    wherein each of the plurality of destination nodes (140, 150, 160) comprising a processing circuit (602) adapted to select an automated load control.

2. The arrangement of claim 1, further comprising:

a grid controller (102); and
a pluralité of intermediate nodes (120, 130), each intermediate node coupled to the grid controller (102), a first intermediate node (120) including the processing circuit (302); wherein
the grid controller (102) is configured to

calculate the desired first index ($DDI_1$).
calculate the desired aggregrate index (AI)
calculate at least a second desired aggregate index ($DDI_n$);
communicate the desired aggregate index (AI) to the processing circuit, and communicated the second desired aggregate index ($DDI_n$) to a second intermediate node (130).

3. The arrangement of claim 2, wherein the grid controller (102) is configured to calculate the aggregate desired green index and the second aggregate desired index based on the desired first index and historic energy consumption data.

4. The arrangement of claim 3, wherein the grid controller (102) is configured to calculate the aggregate desired index on a daily basis.

5. The arrangement of claim 3, wherein the processing circuit is further configured to:

determine each desired destination index based on the desired aggregate index and historic consumption data associated with the corresponding destination node..

6. The arrangement of claim 5, wherein the processing circuit is configured to determine each desired destination index on a daily basis.

7. The arrangement of claim 1, wherein the desired aggregate index comprises a value derived from energy consumption information, and carbon content information relating to the energy consumption information.

8. The arrangement of claim 1, wherein the desired aggregate index comprises a value derived from energy availability information from a plurality of energy sources and a carbon value associated with each of the plurality of sources.

9. An arrangement for use in an energy grid, comprising:

a grid controller (102);
a plurality of intermediate nodes (120, 130) each coupled to the grid controller (102), and
a plurality of destination nodes (140, 150, 160, 170, 180, 190) each coupled to an associated intermediate node, wherein
the grid controller (102) is configured to

calculate a desired first index for the grid (DI), the desired index representative of carbon consumption,
calculate desired intermediate indices (DDI) for each of the plurality of intermediate nodes,
communicate the desired intermediate index (DDI) to each of the plurality of intermediate nodes;

each of the plurality of intermediate nodes (120, 130) is configured to

receive a corresponding desired intermediate index (DDI) from the grid controller (102),
calculate desired destination indices (DCI) for destination nodes of the plurality of destination nodes (140, 150, 160) that are coupled to the intermediate node,
communicate the desired destination indices (DCI) to each of the plurality of destination nodes (140, 150, 160) that are coupled to the intermediate node; and

each of the destination nodes is configured to

display the desired destination index (DCI) for the destination node on a display (604);

wherein each of the plurality of destination nodes (140, 150, 160) comprising a processing circuit (602) adapted to select an automated load control.

10. The arrangement of claim 9, wherein the destination node is further configured to communicate a user-generated adjusted destination index to the intermediate node.

11. The arrangement of claim 9, wherein the intermediate node is further configured to:

receive the user-generated adjusted destination index
determine a revised intermediate index based at least in part on the received adjusted destination index; and
communicate the revised intermediate index to the grid controller (102).

12. The arrangement of claim 11, wherein the grid controller (102) is further configured to calculate a revised first index for the grid based at least in part on the revised intermediate index.

13. The arrangement of claim 12, wherein the grid controller (102) is further configured to:

communicate a request to an energy provider node, the request including information generated based on the revised first index;
receiving energy availability information from the energy provider node responsive to the request.

14. The arrangement of claim 9, wherein the desired aggregate index comprises a value derived from energy consumption information, and carbon content information relating to the energy consumption information.

15. An arrangement for use in a distributed system (100) for an energy grid, comprising:

a plurality of designation nodes;
a computing system (300), said computing system including:
a memory (310) including programming instructions;
a processing circuit (302); and
a communication circuit (308) operably connected to receive a desired destination index (DDI) based on a desired aggregate carbon index from a remote node (115), the desired destination index (DDI) including information representative of desired carbon consumption for an electrical load associated with the arrangement, and

wherein the processing circuit (302) is further configured to

generate a revised destination index (RDI) based on user-generated information, and communicate the revised destination index (RDI) to the remote node (110);

wherein each of the plurality of destination nodes (140,150,160) comprising a processing circuit (602) adapted to select an automated load control.

**Patentansprüche**

1. Eine Anordnung für den Gebrauch in einem verteilten System (100) für ein Stromnetz umfasst:

einen Verarbeitungskreislauf (302); und
eine Vielzahl an Zielknoten (140, 150, 160), die an den Entwicklungskreislauf angeschlossen sind;

wobei

der Verarbeitungskreislauf (302) konfiguriert ist um:

einen gewünschten Zielindex (DCI) für jede der Vielzahl an Zielknoten (140, 150, 160) basierend auf einem gewünschten gewichteten Summenindex (DDI) für die Vielzahl der Zielknoten (140, 150, 160) zu berechnen, wobei der gewünschte gewichtete Summenindex (DDI) für den Karbon Verbrauch repräsentative Informationen beinhaltet, und
jeden gewünschten Zielindex (DCI) zu dem korrespondierenden Knoten der Vielzahl an Zielknoten (140, 150, 160) zu kommunizieren; und jeder der Vielzahl an Zielknoten (140, 150, 160) konfiguriert ist um:

den gewünschten Zielindex (DCI) vom Verarbeitungskreislauf (302) zu erhalten,
den gewünschten Zielindex (DCI) auf einem Bildschirm (604)
abzubilden;

wobei jeder der Vielzahl an Zielknoten (140, 150, 160) einen

Verarbeitungskreislauf (602) umfasst, der dafür geeignet ist eine automatische Laststeuerung auszuwählen.

2. Die Anordnung gemäss Anspruch 1 umfasst weiter:

einen Netzcontroller (102); und
eine Vielzahl an dazwischenliegenden Knoten (120, 130), wobei jeder dazwischenliegende Knoten an den Netzcontroller (102) angeschlossen ist, ein erster dazwischenliegender Knoten (120) einschliesslich des Verarbeitungskreislaufs (302); wobei
der Netzcontroller (102) konfiguriert ist um

den ersten gewünschten Index ($DDI_1$) zu berechnen,
den gewünschten gewichteten Summenindex (AI) zu berechnen.
mindestens einen zweiten gewünschten gewichteten Summenindex ($DDI_n$) zu berechnen;
den gewünschten gewichteten Summenindex (AI) dem Entwicklungskreislauf mitzuteilen, und den zweiten gewünschten gewichteten Summenindex ($DDI_n$) an einen zweiten dazwischenliegenden Knoten (130) mitzuteilen.

3. Die Anordnung gemäss Anspruch 2, wobei der Netzcontroller (102) konfiguriert ist um den gewünschten gewichteten grünen Summenindex und den zweiten gewünschten gewichteten Summenindex basierend auf dem gewünschten ersten Index und historischen Daten über den Energieverbrauch zu berechnen.

4. Die Anordnung gemäss Anspruch 3, wobei der Netzcontroller (102) konfiguriert ist um täglich den gewünschten gewichteten Summenindex zu berechnen.

5. Die Anordnung gemäss Anspruch 3, wobei der Verarbeitungskreislauf weiter konfiguriert ist um:

jeden gewünschten Zielindex, basierend auf dem gewünschten gewichteten Summenindex und den historischen Daten über den Energieverbrauch, die dem entsprechenden Zielknoten zugeordnet sind, zu berechnen.

6. Die Anordnung gemäss Anspruch 5, wobei der Verarbeitungszyklus konfiguriert ist um jeden gewünschten Zielindex täglich zu bestimmen.

7. Die Anordnung gemäss Anspruch 1, wobei der gewünschte gewichtete Summenindex einen Wert umfasst, der von den Informationen über den Energieverbrauch, und Informationen über den Karbongehalt mit Bezug auf den Informationen über den Energieverbrauch, abgeleitet wurde.

8. Die Anordnung gemäss Anspruch 1, wobei der gewünschte gewichtete Summenindex einen Wert enthält, der von Informationen über die Energieverfügbarkeit von einer Vielzahl an Energiequellen, abgeleitet wurde und einen mit jeder der Vielzahl an Quellen einhergehenden Karbonwert.

9. Eine Anordnung für den Gebrauch in einem Stromnetz umfasst:

einen Netzcontroller (102);
eine Vielzahl an dazwischenliegenden Knoten (120, 130), von denen jeder an den Netzcontroller (102) angeschlossen ist, und eine Vielzahl an Zielknoten (140, 150, 160, 170, 180, 190), von denen jeder an einen verbundenen dazwischenliegenden Knoten angeschossen ist, wobei der Netzcontroller (102) konfiguriert ist um

einen gewünschten ersten Index für das Netz (DI) zu berechnen, wobei dieser gewünschte Index typisch für den Karbonverbrauch ist,

gewünschte dazwischenliegende Indexe (DDI) für jeden der Vielzahl an dazwischenliegenden Knoten zu berechnen;

wobei jeder der dazwischenliegenden Knoten (120, 130) konfiguriert ist um

einen entsprechenden gewünschten dazwischenliegenden Index (DDI) vom Netzcontroller (102) zu erhalten,
gewünschte Zielindexe (DCI) für Zielknoten der Vielzahl an Zielknoten (140, 150, 160), die mit dem dazwischenliegenden Knoten verbunden sind, zu berechnen,
die gewünschten Zielindexe (DCI) jedem der Vielzahl an Zielknoten (140, 150, 160), die mit dem dazwischenliegenden Knoten verbunden sind, mitzuteilen; und

wobei jeder der Zielknoten konfiguriert ist um

den gewünschten Zielindex (DCI) für den Zielknoten auf einem Bildschirm (604) abzubilden;

wobei jeder der Vielzahl an Zielknoten (140, 150, 160) einen Verarbeitungskreislauf (602) umfasst, der dafür geeignet ist eine automatische Laststeuerung auszuwählen.

10. Die Anordnung gemäss Anspruch 9, wobei der Zielknoten weiter konfiguriert ist um einen vom Nutzer erzeugten, angepassten Zielindex an den dazwischenliegenden Knoten weiterzuleiten.

11. Die Anordnung gemäss Anspruch 9, wobei der dazwischenliegende Knoten weiter konfiguriert ist um:

den vom Nutzer erzeugten, angepassten Zielindex zu empfangen
einen überarbeiteten Zwischenindex, der wenigstens zum Teil auf dem erhaltenen, angepassten Zielindex basiert, zu bestimmen; und
um den überarbeiteten Zwischenindex an den Netzcontroller (102) weiterzuleiten.

12. Die Anordnung gemäss Anspruch 11, wobei der Netzcontroller (102) weiter konfiguriert ist, um einen ersten überarbeiteten Index für das Netz, der wenigstens zum Teil auf dem überarbeiteten Zwischenindex basiert, zu berechnen.

13. Die Anordnung gemäss Anspruch 12, wobei der Netzcontroller (102) weiter konfiguriert ist, um:

eine Anfrage einem Knoten für die Stromversorgung mitzuteilen, wobei diese Anfrage Informationen, die basierend auf dem überarbeitet ersten Index erzeugt wurden, beinhaltet;
Informationen über die Stromverfügbarkeit vom Knoten für die Stromversorgung als Antwort auf die Anfrage zu erhalten.

14. Die Anordnung gemäss Anspruch 9, wobei der gewünschte gewichtete Summenindex einen Wert umfasst, der von den Informationen über den Stromverbrauch und Informationen über den Karbongehalt mit Bezug auf den Informationen über den Energieverbrauch, abgeleitet wurde.

15. Eine Anordnung für den Gebrauch in einem verteilten System (100) für ein Stromnetz umfasst:

eine Vielzahl an Zielknoten;
ein Computersystem (300), wobei dieses System folgendes beinhaltet:

einen Speicher (310), inklusive Programmieranweisungen;
einen Verarbeitungskreislauf (302); und
einen Kommunikationskreislauf (308), der betriebsbereit verbunden ist um einen gewünschten Zielindex (DDI), basierend auf einem gewünschten gewichteten Karbon-Summenindex, von einem entfernten Knoten (110) zu erhalten, wobei der gewünschte Zielindex (DDI) Informationen beinhaltet, die repräsentativ für einen gewünschten Karbonverbrauch für eine mit der Anordnung einhergehenden elektrischen Last sind, und

wobei der Verarbeitungskreislauf (302) weiter konfiguriert ist um

einen überarbeiteten Zielindex (RDI), basierend auf vom Nutzer generierten Informationen, zu erzeugen, und

den überarbeiteten Zielindex (RDI) an den entfernten Knoten (110) weiterzuleiten;

wobei jeder der Vielzahl an Zielknoten (140, 150, 160) einen Verarbeitungskreislauf (602) umfasst, der dafür geeignet ist eine automatische Laststeuerung auszuwählen.

**Revendications**

1. Un agencement destiné à une utilisation dans un système distribué (100) pour un réseau d'énergie, comprenant:

un circuit de traitement (302), et
une pluralité de noeuds de destination (140, 150, 160) couplés au circuit de traitement,

dans lequel

le circuit de traitement (302) est configuré de façon à

calculer un indice de destination souhaité (DCI) pour chaque noeud de la pluralité de noeuds de destination (140, 150, 160) en fonction d'un indice global souhaité (DDI) pour la pluralité de noeuds de destination (140, 150, 160), l'indice global souhaité (DDI) contenant des informations représentatives d'une consommation de carbone, et
communiquer chaque indice de destination souhaité (DCI) au noeud correspondant de la pluralité de noeuds de destination (140, 150, 160), et

chaque noeud de la pluralité de noeuds de destination (140, 150, 160) est configuré de façon à :

recevoir l'indice de destination souhaité (DCI) à partir du circuit de traitement (302),
afficher l'indice de destination souhaité (DCI) sur un dispositif d'affichage (604),

chaque noeud de la pluralité de noeuds de destination (140, 150, 160) comprenant un circuit de traitement (602) adapté de façon à sélectionner une commande de charge automatisée.

2. L'agencement selon la revendication 1, comprenant en outre:

un dispositif de commande de réseau (102), et
une pluralité de noeuds intermédiaires (120, 130), chaque noeud intermédiaire étant couplé au dispositif de commande de réseau (102), un premier noeud intermédiaire (120) comprenant le circuit de traitement (302),
le dispositif de commande de réseau (102) étant configuré de façon à

calculer le premier indice souhaité $(DDI_1)$,
calculer l'indice global souhaité (AI),
calculer au moins un deuxième indice global souhaité $(DDI_n)$,
communiquer l'indice global souhaité (AI) au circuit de traitement, et communiquer le deuxième indice global souhaité $(DDI_n)$ à un deuxième noeud intermédiaire (130).

3. L'agencement selon la revendication 2, dans lequel le dispositif de commande de réseau (102) est configuré de façon à calculer l'indice vert global souhaité et le deuxième indice global souhaité en fonction du premier indice souhaité et de données d'historique de consommation d'énergie.

4. L'agencement selon la revendication 3, dans lequel le dispositif de commande de réseau (102) est configuré de façon à calculer l'indice global souhaité quotidiennement.

5. L'agencement selon la revendication 3, dans lequel le circuit de traitement (302) est configuré en outre de façon à :

déterminer chaque indice de destination souhaité en fonction de l'indice global souhaité et de données d'historique de consommation associées au noeud de destination correspondant.

**6.** L'agencement selon la revendication 5, dans lequel le circuit de traitement est configuré de façon à déterminer chaque indice de destination souhaité quotidiennement.

**7.** L'agencement selon la revendication 1, dans lequel l'indice global souhaité contient une valeur dérivée d'informations de consommation d'énergie et d'informations de teneur en carbone relatives aux informations de consommation d'énergie.

**8.** L'agencement selon la revendication 1, dans lequel l'indice global souhaité contient une valeur dérivée d'informations de disponibilité d'énergie à partir d'une pluralité de sources d'énergie et une valeur de carbone associée à chaque source de la pluralité de sources.

**9.** Un agencement destiné à une utilisation dans un réseau d'énergie, comprenant:

un dispositif de commande de réseau (102),
une pluralité de noeuds intermédiaires (120, 130), chacun d'eux étant couplé au dispositif de commande de réseau (102), et
une pluralité de noeuds de destination (140, 150, 160, 170, 180, 190), chacun d'eux étant couplé à un noeud intermédiaire associé, le dispositif de commande de réseau (102) étant configuré de façon à

calculer un premier indice souhaité pour le réseau (DI), l'indice souhaité étant représentatif d'une consommation de carbone,
calculer des indices intermédiaires souhaités (DDI) pour chaque noeud de la pluralité de noeuds intermédiaires,
communiquer l'indice intermédiaire souhaité (DDI) à chaque noeud de la pluralité de noeuds intermédiaires,
chaque noeud de la pluralité de noeuds intermédiaires (120, 130) est configuré de façon à
recevoir un indice intermédiaire souhaité (DDI) correspondant à partir du dispositif de commande de réseau (102),
calculer des indices de destination souhaités (DCI) pour des noeuds de destination de la pluralité de noeuds de destination (140, 150, 160) qui sont couplés au noeud intermédiaire,
communiquer les indices de destination souhaités (DCI) à chaque noeud de la pluralité de noeuds de destination (140, 150, 160) qui sont couplés au noeud intermédiaire, et

chacun des noeuds de destination est configuré de façon à

afficher l'indice de destination souhaité (DCI) pour le noeud de destination sur un dispositif d'affichage (604), chaque noeud de la pluralité de noeuds de destination (140, 150, 160) comprenant un circuit de traitement (602) adapté de façon à sélectionner une commande de charge automatisée.

**10.** L'agencement selon la revendication 9, dans lequel le noeud de destination est configuré en outre de façon à communiquer un indice de destination ajusté généré par un utilisateur au noeud intermédiaire.

**11.** L'agencement selon la revendication 9, dans lequel le noeud intermédiaire est configuré en outre de façon à :

recevoir l'indice de destination ajusté généré par un utilisateur,
déterminer un indice intermédiaire révisé en fonction au moins en partie de l'indice de destination ajusté reçu, et
communiquer l'indice intermédiaire révisé au dispositif de commande de réseau (102).

**12.** L'agencement selon la revendication 11, dans lequel le dispositif de commande de réseau (102) est configuré en outre de façon à calculer un premier indice révisé pour le réseau en fonction au moins en partie de l'indice intermédiaire révisé.

**13.** L'agencement selon la revendication 12, dans lequel le dispositif de commande de réseau (102) est configuré en outre de façon à :

communiquer une demande à un noeud de fournisseur d'énergie, la demande contenant des informations générées en fonction du premier indice révisé,
recevoir des informations de disponibilité d'énergie à partir du noeud de fournisseur d'énergie en réponse à la demande.

EP 2 730 003 B1

**14.** L'agencement selon la revendication 9, dans lequel l'indice global souhaité contient une valeur dérivée d'informations de consommation d'énergie et d'informations de teneur en carbone relatives aux informations de consommation d'énergie.

**15.** Un agencement destiné à une utilisation dans un système distribué (100) pour un réseau d'énergie, comprenant:

une pluralité de noeuds de désignation, un système informatique (300), ledit système informatique comprenant:

une mémoire (310) contenant des instructions de programmation,
un circuit de traitement (302), et
un circuit de communication (308) raccordé de manière opérationnelle de façon à recevoir un indice de destination souhaité (DDI) en fonction d'un indice global de carbone souhaité à partir d'un noeud distant (116), l'indice de destination souhaité (DCI) contenant des informations représentatives d'une consommation de carbone souhaitée pour une charge électrique associée à l'agencement, et
le circuit de traitement (302) étant configuré en outre de façon à

générer un indice de destination révisé (RDI) en fonction d'informations générées par un utilisateur, et

communiquer l'indice de destination révisé (RDI) au noeud distant (116);

chaque noeud de la pluralité de noeuds de destination (140, 150, 160) comprenant un circuit de traitement (602) adapté de façon à sélectionner une commande de charge automatisée.

*FIG. 1*

**FIG. 2**

**FIG. 3**

RECEIVE ENERGY AND SOURCE AVAILABILITY INFORMATION — 401

DETERMINE ACTUAL CARBON INDEX BASED ON ACTUAL DISTRICT INDICES — 402

STORE ACTUAL CARBON AND ACTUAL DISTRICT INDICES — 404

CALCULATE DESIRED INDEX FOR CITY — 406

CALCULATE DESIRED DISTRICT INDICES FOR ALL DISTRICTS — 408

COMMUNICATE DISTRICT INDICES TO CORRESPONDING DISTRICT MANAGEMENT SYSTEMS — 410

RECEIVE REVISED DISTRICT INDICES — 412

CALCULATE REVISED INDEX FOR CITY — 414

FIG. 4

DETERMINE ACTUAL DISTRICT INDEX BASED ON ACTUAL CONSUMER INDICES — 502

PROVIDE ACTUAL DISTRICT INDEX TO INT'D MANAGEMENT SYSTEM AND STORE LOCALLY — 504

RECEIVE DESIRED DISTRICT INDEX FROM IMS/SGC — 506

CALCULATED DESIRED CONSUMER INDICES BASED ON RECEIVED DESIRED DISTRICT INDEX — 508

COMMUNICATE DESIRED CONSUMER INDICES TO CORRESPONDING CONSUMER BUILDING MANAGEMENT SYSTEMS — 510

RECEIVE REVISED CONSUMER INDICES — 512

CALCULATE REVISED DISTRICT INDEX BASED ON REVISED CONSUMER INDICES — 514

COMMUNICATE REVISED INDEX TO IMS/SGC — 516

FIG. 5

*FIG. 6*

RECEIVE DESIRED
CONSUMER INDEX — 702

↓

RECEIVE ENERGY
AVAILABILITY AND
SOURCE INFORMATION — 704

↓

DETERMINE ENERGY
CONSUMPTION GOAL
BASED ON RECEIVED INFO — 706

↓

DISPLAY GREEN
INDEX AND ENERGY
CONSUMPTION GOAL — 708

↓

PROVIDE USER OPTIONS TO:
1) TRADE ACCESS TO DIFF'T
   ENERGY SOURCES
2) ALLOW LOAD CONTROL
3) USE INTERACTIVE CARBON
   CONSUMPTION MGMT
   ASSISTANCE
4) INQUIRE REGARDING
   INCENTIVES — 710

↓

RECEIVE USER INPUT
IDENTIFYING A REVISED
CONSUMER INDEX — 712

↓

COMMUNICATE REVISED
CONSUMER INDEX TO DMS — 714

## FIG. 7